Europäisches Patentamt

European Patent Office

Office européen des brevets

(11) Publication number: **0 268 928**
**A2**

(12) **EUROPEAN PATENT APPLICATION**

(21) Application number: **87116571.8**

(22) Date of filing: **10.11.87**

(51) Int. Cl.⁴: **A01N 25/10** , **A01N 25/32** ,
**A01N 57/12**

(30) Priority: **24.11.86 US 934071**

(43) Date of publication of application:
**01.06.88 Bulletin 88/22**

(84) Designated Contracting States:
**AT BE CH DE ES FR GB GR IT LI LU NL SE**

(71) Applicant: **AMERICAN CYANAMID COMPANY**
**1937 West Main Street P.O. Box 60**
**Stamford Connecticut 06904-0060(US)**

(72) Inventor: **Mahmood, Tariq**
**37 Drakestown Road**
**Flanders New Jersey 07836(US)**

(74) Representative: **Wächtershäuser, Günter, Dr.**
**Tal 29**
**D-8000 München 2(DE)**

(54) Safened pesticidal dispersion resin compositions for controlling soil borne pests and process for the preparation thereof.

(57) The present invention relates to novel dry-blended extrudable pesticidal resin compositions, extruded pesticidal resin compositions and pelletized pesticidal resin compositions comprising, as the active ingredient, 0,0-diethyl S-[[(1,1-dimethylethyl)thio]methyl]phosphorodithioate, 0,0-diethyl S-(ethylthiomethyl)-phosphorodithioate or a pesticidal chemical wherein said technical grade of said pesticidal chemical has a dermal and/or oral LD50, as measured on rats or rabbits or less than 50 mg/kg. The novel compositions of the present invention are characterized by markedly reduced mammalian toxicity and are essentially free of dust. Further, the present invention also relates to a process for preparing the present safened pesticidal resin compositions.

EP 0 268 928 A2

# SAFENED PESTICIDAL DISPERSION RESIN COMPOSITIONS FOR CONTROLLING SOIL BORNE PESTS AND PROCESS FOR THE PREPARATION THEREOF

## BACKGROUND OF THE INVENTION

The present invention relates to safened solid pesticidal dispersion resin compositions which previously exhibited toxic dermal effects of the active pesticide. Examples of the type of active ingredient safened in the present compositions include 0,0-diethyl S-[[(1,1-dimethylethyl)thio]methyl]phosphorodithioate, also known as terbufos, and 0,0-diethyl-S-(ethylthiomethyl)phosphorodithioate, also known as phorate. U.S. Patent 2,586,655, issued to Hook on February 19, 1952, generally discloses these compounds, and U.S. Patent 2,596,076, issued to Hook on May 6, 1952, discloses terbufos, with U.S. Patent 2,759,010, issued to Lorenz et al on August 14, 1956 disclosing phorate.

Both terbufos and phorate are effective soil and systemic insecticide-nematicides and are commercially used throughout the world. Unfortunately, these compounds, although effective insecticide-nematicides, also are toxic to mammals if they should enter the mammal's circulatory system through ingestion, inhalation or dermal absorption. This toxicity is more apparent by the LD50 values of these compounds. The acute oral LD50 value in rats of phorate is 1.6-3.7 mg technical/kg and for terbufos, 1.6 mg technical/kg. The acute dermal toxicities in rats are 2.5-6.2 mg technical phorate/kg and 7.4 mg technical terbufos/kg animal. Likewise, the acute dermal toxicities on rabbits are 3.1-6.4 mg technical phorate/kg animal and 1.0 mg technical terbufos/kg animal.

It can be seen, therefore, that there is potential hazard for individuals exposed to handling the pesticides, such as terbufos and phorate, as well as other such pesticides with acute oral and/or acute dermal toxicities less than about 50 mg/kg. Those individuals exposed to the manufacture, purchasing, handling, transportation and use of such pesticides are at high risk of exposure. These potential health safety problems have spurred attempts to improve the LD50 values of these pesticides and to provide compositions which exhibit better margins of safety than originally available. U.S. Patent 4,059,700 issued to Lindsay on November 22, 1977, relates to a process to improve the safety of terbufos. Montmorillonite clay is used as a carrier for terbufos and phorate. This composition provides a product with an LD50 dermal toxicity, on rabbits, of about 27-37 mg/kg. Thus, the dermal toxicity is 2 to 3 times less toxic than the compositions available prior to the Lindsay invention. U.S. Patent 4,485,103 and 4,343,790, issued to Pasarela on November 27, 1984 and August 10, 1982, respectively, also improve the margin of safety of insecticide-nematicide compositions containing terbufos or phorate. Coating an inert sorptive or non-sorptive granular carrier impregnated or coated with terbufos or phorate with a finely divided sorptive substrate and an acrylic polymer provides a safer composition as evidenced by rabbit dermal LD50 values of about 40 and 80 mg/kg.

Eventhough these inventions improve the dermal toxicities of pesticides such as terbufos and phorate, an effective resin-type reduced toxicity pesticidal composition with residual activity and good biological activity was still needed. U.S. Patent 4,554,155 issued to Allan et al on November 19, 1985 discloses controlled-release compositions which may contain a wide variety of listed pesticides, including phorate. These controlled-release compositions specifically contain kraft lignin and a biodegradable water-insoluble organic polymer that releases the pesticide by structural disintegration of the outer surfaces. As such, these compositions are based on erosion of the matrix to control the release of pesticide. Exposure of the surfaces of those compositions to the environment results in the loss of the structural integrity of the polymer and/or fracture thereof. Therefore, new surfaces of the biologically active material-polymer are exposed to the environment for further release of the component.

Resins also are used in animal collars and tags to control a variety of ectoparasites which infest such animals. For instance, U.S. Patent No. 4,150,109 issued to Dick et al on April 17, 1979 discloses animal pesticidal collars containing diazinone or diazoxone, a solid macromolecular substance chosen from solid vinyl and vinylidene substances and a plasticizer. About forty organo-phosphates are listed for possible incorporation into these animal collars, but terbufos and phorate are not among the pesticides listed. This is not, however, altogether surprising since terbufos and phorate are soil and plant systemic insecticides and are extremely toxic to mammals.

Another animal collar containing a pesticide is disclosed in U.S. Patents 4,134,977 and 4,158,051, issued to Greenberg on January 16, 1979 and June 12, 1979, respectively. The Greenberg collars are prepared with dimethyl 1,2-dibromo-2,2-dichloroethyl phosphate, commonly referred to as naled, a plasticized polyvinyl chloride, a substantially non-volatile carbamate and a surface porosity control agent such as chloro-acetaldehyde, chloral, bromoacetaldehyde, bromal or the like. Those compositions provide controlled release of the insecticide as a vapor to surround the animal and as a powder that migrates over the coat of the animal.

U.S. Patent 4,198,782 issued to Kydonleus on April 22, 1980, discloses a method for making polymeric controlled-release pesticides by granulating a laminated sheeting material comprising a non-porous polymeric sheet, a polymeric core film containing phorate or other insecticide and a second solid non-porous polymeric sheet adhered to the insecticide-containing polymeric core material. The thus-prepared sandwich is then chopped into granulated particles. Insect control is obtained with the granulated insecticide compositions prepared as described. However, unfortunately when the laminated materials are cut to the sizes necessary for use in the field, extended activity is lost and little or no safening appears to be achieved.

Other resin compositions are disclosed in U.S. Patent 4,041,151 issued to Milionis et al on August 9, 1977 and U.S. Patent 4,145,409 issued to Pasarela on March 20, 1979. The preparation of insecticidal and acaricidal resin compositions formed into flexible collars for attaching to animals to protect said animals against attack and/or infestation by insects and acarids is disclosed in those two U.S. patents. The compositions, however, are primarily designed to deliver an insecticidal or acaridicidal agent having relatively low mammalian toxicity onto the coat and body of an animal. Pesticides with high mammalian toxicity are not listed for incorporation into resins or that such incorporation may provide a concentrate or composition with markedly improved safety.

Further, U.S. Application for Letters Patent Serial Number    , Cannelongo, filed concurrently herewith and incorporated herein by reference thereof provides compositions for safening the hazards associated with the pesticides of the present invention. U.S. Application for Letters Patent Serial Number    , Mahmud et al and Serial Number    , Cannelongo et al, filed concurrently herewith and incorporated herein by reference thereof relate to sorptive and non-sorptive granular compositions utilizing certain resins for safening the pesticides of the present invention.

Thus, although the above-described references provide phorate, terbufos and/or other pesticide compositions with reduced dermal toxicity and/or extended residual activity, the disclosed technology seems insufficient to lower the margin of safety or the oral and/or dermal LD50 values low enough to remove said pesticides from the hazardous pesticide catagory.

To add to the potential problem, PVC (polyvinyl chloride) compositions which contain highly toxic pesticidal agents are practically not simple to produce by simply incorporate the pesticide into the PVC. Bulk density for directed application is lacking and effective extended insect control, i.e. throughout the growing season, plus the necessary safety in handling of the finished product is not present.

## SUMMARY OF THE INVENTION

The present invention provides a solution to these problems unanswered successfully by the state of the art by providing novel dry-blended extrudable pesticidal dispersion resin compositions and pelletized pesticidal resin compositions, in concentrate or finished product form, which combine enhanced safety and effective residual activity of the product.

It is an object of the present invention, therefore, to provide pesticidal compositions and processes for the preparation thereof wherein said composition contains a highly toxic pesticidal agent, selected polyvinyl chloride dispersion resin having appropriate physical and chemical characteristics, selected plasticizers, selected resin stabilizers, lubricants and mineral additives. Surprisingly, these compositions provide an agronomically useful product which is characterized by non-dusting, markedly reduced mammalian toxicity, significantly increased bulk density and extended residual activity.

It is an additional object of the present invention to provide pesticidal compositions, particularly compositions containing the toxic pesticides with low LD50, and to provide such pesticides in a form having significantly improved dermal mammalian toxicity, improved insecticidal-nematicidal activity and extended residual effectiveness.

A further object of this invention is to provide pesticidal compositions which provide a margin of safety otherwise not found in previously-available compositions containing said pesticides.

These and other objects of the present invention will become more apparent by the detailed description of the invention provided hereinbelow.

3

## DETAILED DESCRIPTION OF THE INVENTION

The present invention relates to safened pesticidal dispersion resin compositions for controlling soil borne pests and process for the preparation thereof. The novel safened dispersion resin compositions of the present invention are dry blended, extrudable resin compositions, extruded pesticidal resin compositions and pelletized pesticidal resin compositions comprising pesticide, the technical grade of said pesticide having a dermal LD50, measured on rats or rabbits, of less than 50 mg/kg. The invention also relates to the unique process for the preparation of the present safened pesticidal compositions.

The compositions of the invention are prepared either as concentrates or finished products. The concentrates are prepared by dry blending about 4.0% to 65%, preferably about 10.0% to 50%, by weight, of a pesticide having an oral and/or a dermal LD50, measured on rats or rabbits, of less than 50 mg/kg; and about 5.0% to 60%, by weight, of a polyvinylic resin having an average molecular weight of about 200,000 to 400,000, preferably about 260,000 to 340,000. In addition, about 0.2% to 1.5%, preferably about 0.2% to 1.0%, by weight, of a stabilizing agent or mixture of heat-stabilizing agents for the resin and about 0.0% to 2.0%, by weight, of a lubricant are included. Precipitated silica, about 2.0% to 30.0%, by weight, provides increased sorptive capacity for liquid pesticides in the dry blend.

Pesticides useful in the concentrates and finished products of the present invention include, but are not limited to, 0,0-diethyl S-[[(1,1-dimethylethyl)thio]methyl]phosphorodithioate, (terbufos); 0,0-diethyl S-(ethylthiomethyl)phosphorodithioate, (phorate); (±)-O-ethyl S-phenylethylphosphonodithioate, (fonofos); diethyl 1,3-dithiolan-2-ylidene phosphoramidate, (phosfolan); 2-methyl-2-(methylthio)propionaldehyde O-methylcarbamoyloxine (aldicarb); O,O-diethyl 2-ethylthioethyl phosphorothioate (demeton); O-ethyl S,S-dipropyl phosphorodithioate (ethoprophos); O,O-diethyl O-2-pyrazinyl phosphorothioate (thionazin); 2,3-dihydro-2,2-dimethyl-7-benzofuranyl methylcarbamate, (carbofuran). 1-methylethyl-2[[ethoxy-[(1-methylethyl)amino]phosphinothioyl]oxy]benzoate, (isofenphos); O,O-diethyl S-2-ethylthioethylphosphorodithioate, (disulfoton); and O,O-diethyl O-4-(methylsulfinyl)-phenyl phosphorothioate, (fensulfothion) and the like. Terbufos and phorate are especially preferred in the concentrates and finished compositions of this invention because both are excellent plasticizing agents, as well as superior soil and systemic pesticides.

These two compounds are highly effective for controlling soil borne insects and nematodes which attack the root systems of plants. They also are effective for controlling chewing and puncturing insects and arachnids which feed on the foliage or fluids of plants.

Although this invention is especially useful for improving the safety in handling of very toxic chemicals referred to hereinabove with acute oral or dermal LD50's, as measured on rats or rabbits, of 50 mg/kg or less, the invention also may be used to improve the safety in handling of other chemicals, also quite toxic, but which do not have an LD50 of 50 mh/kg. For example, compounds which have an acute oral or acute dermal toxicity of about 50 mg/kg to about 300 mg/kg, or even 500 mg/kg, can be prepared in accordance with the process of the present invention, with the benefits of enhanced safety and ease of handling. Chemicals in this category include chlorpyrifos, bufencarb, fenthion and the like.

Further, the pesticidal compositions of the present invention provide enhanced extended biological activity, thereby making application easier for the farmer.

The concentrate compositions of the present invention provide an effective and less hazardous manner for transporting highly toxic pesticides, i.e. pesticides with an oral and/or dermal LD 50, measured on rats or rabbits, of less than 50 mg/kg. Although the pesticides useful in the present invention are among the most effective agents for controlling insects, arachnids and nematodes in the soil, particularly terbufos and phorate, they have LD50 as measured on rats or rabbits, of about 1.0 to 50.0 mg.tech/kg, thereby making manufacturing, handling, transporting and using these products a potential hazard. Therefore, extreme care to avoid contact or inhalation of the pesticides was always required.

The concentrates of the present invention are useful products and can have a significant impact on the agricultural industry. These concentrates provide an effective means for reducing dusting and inhalation problems and provide about a 5 to 10 fold margin of safety over the technical grade pesticides from which they are prepared. The present concentrates also provide about 2 to 2.5 fold margin of safety over the presently-marketed compositions containing said pesticides. Since these concentrates do not contain the mineral additives used in the preparation of the extruded and/or pelletized finished compositions of the invention, they have the added advantage of avoiding added shipping costs, which would be assessed against the increased weight and bulk of the mineral additives in the finished products.

Although the concentrates of this invention are useful and provide improved safety in handling of the product in comparison to technical grade pesticide, a finished composition is desired for distribution to farm products distributors, farmers and the like. These finished compositions are prepared in the form of extruded strips, strands, rods, sheets or as free flowing, uniform particulate compositions in which the particulate material may be characterized as dust free beads, granules, pellets, prills or the like.

To prepare the finished products from the above-described concentrates, the concentrate is introduced into a high intensity mixer, along with about 0.0% to 50%, by weight, preferably 0.2% to 25.0%, by weight, of a secondary plasticizing agent and about 20.0% to 80.0%, by weight, and preferably about 20.0% to 55.0%, by weight, of a mineral additive. The mixture is blended at an elevated temperature, cooled, passed to an extruder where it is heated to a temperature of about 160°C, extruded and then pelletized.

When dry blending is needed in the process of the present invention, the concentrate, mineral additives and secondary plasticizing agents are blended using a high intensity mixer-cooler, conducted at temperatures of about 75°C to 110°C. When blending is complete, the mixture is cooled to about 70°C and passed to an extruder or melt pump. This then heats the mixture to a temperature of about 150°C to 180°C, preferably about 155°C to 160°C. The extruder forces the molten polymer mixture through a die having a series of holes, preferably in a circular pattern. As the polymer emerges from the die holes, it is cut into pellets by rotating blades and permitted to solidify as the pellets pass through the cutting chamber. The pellets are picked up in the cutting chamber by a stream of water which transports them to a tempered water system where they are dried and discharged from the drier. The pellet water is then filtered, pressurized, cooled and recirculated to the pelletizer by the tempered water system.

Use of this system for the preparation of the compositions of the present invention is important since it provides an essentially closed system for handling the toxic pesticidal materials. This system eliminates dusting problems and captures any toxicant technical pesticide which may adhere to the surface of the pelleted compositions. Thus, potential environmental pollution problems encountered in the manufacture of conventional pesticidal formulations by conventional methods are avoided.

While the compositions of the present invention can first be prepared as concentrates and then further processed to yield finished compositions, a preferred method for preparing the finished composition involves dry blending about 5% to 60%, based on the weight of the finished product, of a polyvinylic resin with about 20% to 80%, preferably 20% to 55%, by weight of a mineral additive, about 0.2% to 1.5%, preferably 0.2% to 1.0%, by weight, of a stabilizing agent or mixture of stabilizing agents for the resin, about 0.1% to 1.0%, by weight, of a lubricant and about 2.0% to 6.0%, by weight, of precipitated silica. After dry blending the mixture of resin, mineral additive, stabilizer, lubricant and silica, the blended mixture is introduced into a high intensity mixer where it is admixed with about 1% to 30%, by weight, of the pesticide, 0.0% to 50%, by weight, preferably 0.2% to 25.0%, by weight, of a secondary plasticizing agent and about 0.2% to 1.5% of a stabilizing agent. The pesticide, secondary plasticizing agent and stabilizing agent, preferably epoxidized soybean oil, are generally in liquid form.

The mixture then is subjected to high intensity mixing, and the temperature of the mixture is heated to about 75°C to 110°C. The mixture is then quickly cooled and charged into an extruder where it is heated to about 150°C to 180°C and extruded as a ribbon, strip, rod, strand or the like. The extruded ribbon or strand is then introduced into a pelletizer where it is formed into small spheres, pellets or beads.

In the preferred process, the pellets are then introduced into a water transport system in the event that toxicant pesticide adheres to the surface of the particles. This water transport system thus serves to wash the outer surfaces of the particles, trap any toxicant pesticide adhering thereto and prevents escape of toxicant pesticide into the atmosphere. The water is then separated from the pelletized product, and the pellets are dried and screened or sieved to obtain product of the desired pellet size.

Among the pesticides employed in the novel compositions of the present invention are terbufos, phorate, aldicarb, demeton, ethoprophos, thionazin, fonofos, phosfolan, carbofuran, isofenphos, chlorpyrifos, disulfoton, fensulfothion, bufencarb, fenthion, with terbufos and phorate preferred.

Polymers useful in the compositions of the present invention include polyvinyl chloride resins, polyvinyl acetate and polyvinyl alcohol dispersion resins having a weight average molecular weight of about 200,000 to 400,000, preferably 260,000 to 340,000. The polymers of the invention are available from a variety of polymer manufacturers, such as B. F. Goodrich, which offers the following PVC dispersion resins:

Polyvinyl chloride dispersion resins weight average molecular weight about 200,000 and 400,000

| Typical properties | 121 | 124 | 138 | 178 | 184 |
|---|---|---|---|---|---|
| Inherent viscosity, ASTM D 1243 | 1.20 | 0.89 | 1.20 | 1.20 | 0.92 |
| Specific gravity (approx) | 1.40 | 1.40 | - | 1.40 | 1.40 |
| FDA acceptable | yes* | yes* | limited | yes | yes* |
| Flow Properties[2] Brookfield LVF viscosity, mPa.a or cP,SPI-VD-Tl | | | | | |
| 1 hour at 6 RPM | 5 000 | 5 100 | 3 700 | 3 200 | 10 800 |
| 12 RPM | 4 620 | 4 925 | 3 000 | 2 600 | 8 600 |
| 1 month at 6 RPM | 13 600 | 18 000 | 30 000 | 6 500 | 38 000 |
| 12 RPM | 11 200 | 16 500 | 20 000 | 5 700 | 31 000 |
| Severs efflux, BFG-1010-A, gm/100 seconds | 18.4 | 17.6 | 20.0 | 31.3 | 23.6 |
| Severs viscosity, mPa.s or cP | 12 875 | 13 460 | 11 850 | 7 650 | 10 038 |
| Particle size, microns, avg. | 0.75 | 1.2 | 0.92 | 0.56 | 0.9 |
| Vinyl dispersion, microns, max. | 50 | 30 | 30 | 60 | 28 |
| North fineness, SPI-VD-T10 | 4.5 | 5.0 | 5.0 | 4.0 | 5.5 |

0 268 928

Polyvinyl chloride dispersion resins weight average molecular weight about 200,000 and 400,000 (Continued)

| Typical properties | 121 | 124 | 138 | 178 | 184 |
|---|---|---|---|---|---|
| Gel temperature, $^{O}C(^{O}F)$ SPI-VD-T5 | 77(170) | 75(167) | 66(150) | 96(205) | 74(165) |
| Clarity, percent of light transmitted through 20 mil film[3] | 46 | 63 | 91 | 84 | 84 |
| Gloss, Gardner reflectance at $60^{O}$ angle[3] | 79 | 88 | 91 | 84 | 89 |
| Heat stability, aged at $191^{O}C(375^{O}F)$,[3,4] | | | | | |
| minutes to yellow | 30 | 30 | 30[6] | 15 | 30 |
| minutes to dark | 50 | 50 | 60[6] | 35 | 50 |
| Film properties, ASTM D 882 | | | | | |
| Tensile strength, MPa (psi) at | | | | | |
| $121^{O}C(250^{O}F)$ | 3.1(450) | 3.1(450) | 5.0(730) | 3.0(440) | 3.1(450) |
| $149^{O}C(300^{O}F)$ | 8.5(1,240) | 6.1(880) | 16.4(2,375) | 8.1(1,180) | 6.5(937) |
| $177^{O}C(350F)$ | 19.5(2,823) | 15.6(2,263) | 17.6(2,562) | 16.1(2330) | 16.5(2,400) |
| $204^{O}C(400^{O}F)$ | 18.7(2,720) | 15.9(2,313) | 16.6(2,410) | 16.5(2,400) | 15.8(2,297) |

0 268 928

Polyvinyl chloride dispersion resins weight average molecular weight 200,000 and 400,000 (continued)

| Typical properties | 121 | 124 | 138 | 178 | 184 |
|---|---|---|---|---|---|
| Elongation, % at | | | | | |
| 121°C(250°F) | 30 | 50 | 100 | 40 | 50 |
| 149°C(300°F) | 160 | 123 | 330 | 150 | 120 |
| 177°C(350°F) | 427 | 427 | 395 | 380 | 417 |
| 204°C(400°F) | 380 | 423 | 360 | 357 | 400 |

[1]FDA acceptable under "prior sanction" for food contact applications.

[2]Recipe: Geon® resin, 100 parts; DOP, 60 parts.

[3]20-mil film fused 5 minutes at 177°C(350°F).

[4]Geon® resin, 100 parts; DOP, 60; ESO, 5; stabilizer, 3.

[6]Heat aged at 163°C(325°F).

*Note: "A" version only.

0 268 928

Among the secondary plasticizers useful in the preparation of the compositions of this invention are the organic phthalates, such as butyl benzyl phthalate and diisononyl phthalate, organic phosphates such as tricresyl phosphate, epoxidized soybean oil, organic trimellitates, such as trioctyl mellitate or organic citrates such as acetyl tributylcitrate, or mixtures thereof.

Useful stabilizing agents effective for stabilizing the resin include stearates, such as zinc/calcium stearates, alkaline earth metal stearate, epoxidized soybean oil, secondary octyl tins and phosphites and organo barium and cadmium complexes, or mixtures thereof.

Typical mineral additives used in the compositions of the present invention include barium sulfate, calcium sulfate, calcium carbonate, clays such as kaolin, bentonite, attapulgite and montmorillonite, cellulose products, mica, wallstonite and fertilizers such as dicalcium phosphate, tricalcium phosphate and the like, or mixtures thereof.

These mineral additives, especially the alkaline earth metal sulfates and carbonates, are essential components of the extruded and extruded-pelletized products of this invention. While not wanting to be limited by theory, it is believed these mineral additives impart the bulk density to the extrudates that permits the directed application into the furrows or beside the planted crops which they are to protect, thereby inhibiting the movement of the extrudates by wind or rain from the locus of their application. These mineral additives also are believed to be instrumental in providing relatively uniform and extended release of the pesticide from the extrudate and in aiding the decomposition of the extrudates in the soil when the growing season is finished.

Lubricants useful in the present invention to improve the extrudability of the compositions include calcium, magnesium, aluminium and glycerol mono stearate, stearic acid, paraffin waxes, low molecular weight polyethylene and the like.

Increased sorbency of the pesticide is achieved by the addition of precipitated silicone, such as silicon dioxide.

Flow Diagram I provides a graphical illustration of the hereinabove described process of manufacture.

## FLOW DIAGRAM I

Ingredients
Polyvinylic Dispersion Resin
Mineral Additive
Resin Stabilizer
Lubricant
Precipitated Silica

} ⟹ | Dry Blending |

Pesticide
Secondary Plasticizer
Resin Stabilizer

} ⟹ | Impregnation High Intensity Mixer Cooler |

⟱

| Plastication Extrusion |

⟱

| Pelletizing Drying |

⟱

| Screening or Sieving |

⟱

Safened Pesticide
Composition –
Final Product

The apparatus useful in the dry blending aspects of the process of the present invention include high torque intensive mixers and low torque continuous ribbon blenders, both with heat-cool capabilities. The dry blend is prepared by charging the vinyl resin, dry stabilizer (Ca/ZN Stearate) and filler to a mixer heated to 70°C. The blend is premixed for 5 minutes. The liquid portion is weighed and charged to a millipore pressure vessel heated to about 70°C. (The liquid portion consists of the plasticizer, active ingredient and liquid stabilizers.) The dry blend is tumbled at a moderate rate with the liquid portion added over a five minute period. The entire mass is then heated to about 100°C. After adding the liquid, the blend should be

10

free flowing. If not, an amount of SiO₂ i.e. an amount of up to about 30.0%, generally 3.0% to 6.0%, is added. The entire mix is cooled and poured into a special sealable drum or pumped into an extruder, where the composition is compacted and extruded in a spaghetti-like (i.e. strand or rod-like) sheet-like or ribbon-like form. This is then pelletized using an under water pelletizing system. A hot face air cooled system may, of course, be substituted for the under water pelletizer.

The finished products prepared as described above provide a great advantage because they have an increased bulk density of 45 to 100 pounds per cubic foot, generally 50-80 pounds per cubic foot compared to the commercially-available terbufos or phorate clay granulars of 31-40 pounds per cubic feet. This allows the farmer to carry more product per load than could be carried if the product were formulated as a conventional granule. Transportation of more active ingredient per load by truck, tractor, or air delivery is therefore facilitated by the novel formulation of the present invention.

The products of this invention also are more stable to attrition. Since terbufos and phorate both pose potential severe inhalation hazards, with LD50s of 35 mg/kg body weight, reduction or elimination of product dusting and/or release of toxicant pesticide vapor is a safety advantage. Furthermore, the dust particles, even if formed during the process of the present invention, are less hazardous because of their improved dermal property.

Additionally, the present processing technology utilizes extrusion techniques of a continuous closed system process using state of the art technologies, thereby eliminating many manufacturing safety and handling problems.

The present invention is illustrated by the following examples which are illustrative and not limitative thereof.

EXAMPLE 1

Polyvinyl chloride dispersion resin for preparation of safened terbufos pellets using Lindgi-Littleford high intensity mixer and standard PVC/plasticizing technique

The composition is prepared by dry mixing at a temperature of 110°C for about 5 minutes, 46% by weight of B.F. Goodrich 138, having a weight average molecular weight of 300,000, 55% by weight of calcium sulfate, 1.0% by weight of calcium stearate/zinc stearate resin stabilizer and 2% to 30% by weight of precipitated silica (Microcel E® from Johns Manville or PPG). This mixture is then sprayed with about 2% to 65% by weight of terbufos, 7% by weight of the secondary plasticizing agent, butyl benzyl phthalate, and 1% by weight of the stabilizing agent, epoxidized soybean oil. The mixture is stirred for about five minutes at 100°C, and 3.0% by weight of precipitated silica is then added. This mixture then is stirred for about 1 minute. This yields a freely flowable particulate composition having an average particle size of from 10 to 30 mesh. This mixture is then extruded and the acute dermal LD50 determined.

| Ingredients | % By Weight |
| --- | --- |
| PVC dispersion resin - MW 300,000 | 46 |
| Terbufos | 17 |
| Butyl Benzyl Phthalate | 7 |
| Calcium Sulfate | 25 |
| Precipitated Silica | 3 |
| Epoxidized Soybean Oil | 1 |
| Ca/Zn Stearate | 1 |
| | 100% |

The acute dermal LD50 determined for the extrudate of the above composition is an in vitro LD50 of 131 mg/kg and an in vivo LD50 of 100 mg/kg (15% terbufos).

EXAMPLE 2

Safened polyvinyl chloride dispersion resin concentrate composition containing terbufos

Following the procedure of Example 1, polyvinyl chloride, with a weight average molecular weight of about 300,000, is blended with calcium sulfate and precipitated silica at a temperature of about 110°C. To this mixture is then added butyl benzyl phthalate plasticizing agent and terbufos, O,O-diethyl S-[[(1,1-dimethylethyl)thio]methyl]phosphorodithioate.

This concentrate composition is then submitted for acute dermal LD50 evaluation.

| Ingredients | % By Weight |
|---|---|
| PVC Dispersion Resin - MW 300,000 | 23.0 |
| Terbufos | 23.0 |
| Epoxidized Soybean Oil | 1.0 |
| Butyl Benzyl Phthalate | 3.0 |
| Ca/Zn Stearate | 0.5 |
| Calcium Sulfate | 45.0 |
| Precipitated Silica | 4.5 |
| | 100% |

The in vitro LD50 is 95 mg/kg and the in vivo LD50 is 60 mg/kg.

EXAMPLE 3

Safened terbufos polyvinyl chloride dispersion resin compositions

In the present evaluations, or polyvinyl chloride dispersion resin having a weight average molecular weight of 300,000 is dry blended with calcium sulfate and precipitated silica at room temperature. To this mixture is added a mixture of terbufos and butyl benzyl phthalate. Thereafter, the thus-prepared mixtures are oven cured at 135°C, with the rabbit dermal toxicity of the compositions determined. The composition evaluated are as follows:

| Ingredients | % By Weight |
|---|---|
| PVC Dispersion Resin - MW 300,000 | 46.0 |
| Terbufos | 23.0 |
| Epoxidized Soybean Oil | 0.5 |
| Butyl Benzyl Phthalate | 3.0 |
| Ca/Zn Stearate | 0.5 |
| Calcium Sulfate | 27.0 |
| | 100% |

The in vitro LD50 is 118 mg/kg and the in vivo LD50 is >80 mg/kg.

EXAMPLE 4

Safened Polyvinyl chloride resin compositions prepared as in Example 3 and extruded thereof

The composition identified below is prepared following the procedure of Example 3. The composition then is extruded and the extrudate evaluated for acute dermal LD50 values.

| Ingredients | % By Weight |
|---|---|
| PVC Dispersion Resin - MW 300,000 | 22 |
| Terbufos | 23 |
| Butyl Benzyl Phthalate | 3 |
| Calcium Sulfate | 44 |
| Epoxidized Soybean Oil | 1 |
| Ca/Zn Stearate | 1 |
| Precipitated Silica | 6 |
| | 100% |

Extruded Pellets

The chemical assay resulted in a value of 19.8, and the in vivo LD50 is >200 mg/kg.

Dermal toxicity of compositions of the present invention are determined by the following procedure using male albino rabbits as the test animals.

Materials

Five male albino rabbits weighing approximately 2.2 to 3.5 kilograms are selected for each dosage level. The hair is shaved from the entire trunk. Saran tubing or "Vinylite" film, VU 1900, 12 inches wide, 0.04 millimeters thick and of suitable length to fit around the rabbit is used. One felt cloth bandage measuring approximately 9X18 inches is used and four pieces of 1 1/2 inches adhesive tape approximately 14 inches long are used.

Procedure for Solid Materials

The granular composition to be tested is placed in the center of the plastic film and is moistened with water. The rabbit's underside is moistened with water, and the animal is placed belly down on the material. The plastic film is then brought up and around the animal and secured at each end with strips of adhesive tape. The felt cloth is then placed under the belly and brought up and around the animal and secured to the body with the remaining two strips of adhesive tape.

Procedure for Liquid Materials

The animal is placed on the plastic film and wrapped, and the film secured with adhesive tape. The test material is then injected under the plastic with an appropriate size needle and syringe. Then, the felt cloth is placed under the belly and brought up around the animal and secured with the two remaining strips of adhesive tape. This forms a "cuff".

Evaluation

Twenty-four hours after dosing, the "cuff" is removed, and any remaining material is brushed away. If the material cannot be removed, the animal is fitted with a fiber collar which prevents the animal from licking the treatment area. The animals are observed for 14 days, postdosing, noting signs of toxicity, skin irritation and mortality. At the end of the 14 days, the animals are sacrificed and weighted.

By the above procedure, the dermal toxicities of the compositions described in Examples 1-4 above are determined.

**Claims**

1. A pesticidal composition comprising: about 1.0% to 65.0%, by weight, of a pesticide, the technical grade of said pesticide, having an oral and/or dermal LD50, as measured on rats or rabbits, or less than 50 mg/kg; about 5.0% to 60.0%, by weight, of a polyvinylic dispersion resin having a weight average molecular weight of about 200,000 to 400,000; about 0.2% to 2.0%, by weight, of a heat stabilizing agent or mixture of heat stabilizing agents for the resin; about 0.0% to 1.0%, by weight, of a lubricant; about 0.0% to 50% by weight of a secondary plasticizing agent; about 0.0% to 80.0%, by weight, of a mineral additive; and about 2.0% to 30.0%, by weight, of precipitated silica, a sorptive carrier; wherein said pesticidal composition is a solid and has a reduced mammalian toxicity.

2. A pesticidal composition according to Claim 1, wherein said precipitated silica is silicon dioxide.

3. A pesticidal composition according to Claim 2, wherein said pesticide is terbufos, phorate, fonofos, phosfolan, aldicarb, demeton, ethoprophos, thionazin, carbofuran, isofenphos, disulfoton or fensulfothion.

4. A pesticidal composition according to Claim 3, wherein said pesticide is O,O-diethyl S-[[(1,1-dimethylethyl)thio]methyl]phosphorodithioate.

5. A pesticidal composition according to Claim 3, wherein said pesticide is O,O-diethyl S-(ethylthiomethyl)phosphorodithioate.

6. A pesticidal composition according to Claim 2, comprising: about 4.0% to 65.0%, by weight, of said pesticide; about 5.0% to 60.0%, by weight, of said polyvinylic dispersion resin having a weight average molecular weight of about 260,000 to 340,000; about 0.2% to 1.0%, by weight, of said heat stabilizing agent or mixture thereof; about 0.0% to 2.0%, by weight, of said lubricant; and about 3.0% to 6.0% of silicon dioxide.

7. A pesticidal composition according to Claim 6, wherein said pesticide is terbufos, phorate, fonofos, phosfolan, aldicarb, demeton, ethoprophos, thionazin, carbofuran, isofenphos, disulfoton or fensulfothion.

8. A pesticidal composition according to Claim 7, wherein said pesticide is O,O-diethyl S-[[(1,1-dimethylethyl)thio]methyl]phosphorodithioate

9. A pesticidal composition according to Claim 7, wherein said pesticide is O,O-diethyl-S-(ethylthiomethyl)phosphorodithioate.

10. A pestical composition according to Claim 1 comprising: about 1.0% to 30.0%, by weight, of said pesticide; about 5.0% to 60.0%, by weight, of said polyvinylic dispersion resin; about 0.2% to 2.0%, by weight, of said heat stabilizing agent or mixture of heat stabilizing agents for the resin; about 0% to 2.0%, by weight, of said lubricant; about 0.0% to 50.0%, by weight, of said secondary plasticizing agent; about 20.0% to about 80.0%, by weight, of said mineral additive; and about 2.0% to 30.0%, by weight, of SiO$_2$.

11. A pesticidal composition according to Claim 10, wherein said pesticide is terbufos, phorate, fonofos, phosfolan, aldicarb, demeton, ethoprophos, thionazin, carbofuran, isofenphos, disulfoton or fensulfothion.

12. A pesticidal composition according to Claim 11, wherein said pesticide is O,O-diethyl S-[[(1,1-dimethylethyl)thio]methyl]phosphorodithioate.

13. A pesticidal composition according to Claim 11, wherein said pesticide is O,O-diethyl-S-(ethylthiomethyl)phosphorodithioate.

14. A pesticidal composition according to Claim 10, wherein said polyvinylic dispersion resin is polyvinyl acetate or polyvinyl alcohol; said secondary plasticizer is organic phthalate, organic phosphate, organic adipate, epoxidized tall oil, epoxidized vegetable oil, organic trimellitate or organic citrate; said stabilizing agent is metal stearate, alkaline earth metal stearate, epoxidized vegetable oil, organic tin complex or organic phosphite; said lubricant is alkaline earth metal stearate, stearic acid, paraffin wax, amide wax, magnesium, lead or aluminum stearate or a low molecular weight polyethylene; and said mineral additive is alkaline earth metal sulfate or carbonate, clay, mica, wallstonite or cellulose product.

15. A pesticidal composition according to Claim 12, wherein said PVC dispersion resin has a weight average molecular weight of about 260,000 to 340,000.

16. A pesticidal composition according to Claim 13, wherein said PVC dispersion resin has a weight average molecular weight of about 260,000 to 340,000.

17. A pesticidal composition according to Claim 1, wherein said pesticidal composition has extended, enhanced biological activity.

18. A pesticidal resin composition comprising: about 1.0% to 30.0%, by weight, of a pesticide, the technical grade of said pesticide having an oral and/or a dermal LD50, measured on rats or rabbits, of less than 50 mg/kg; about 5.0% to 60.0%, by weight, of a polyvinyl chloride dispersion resin having a weight average molecular weight of about 200,000 to 400,000; about 0.2% to 1.5%, by weight, of a resin stabilizing agent; about 0.2% to 25.0%, by weight, of a secondary plasticing agent; about 20.0% to 55.0%, by weight, of a mineral additive; about 0.0% to 2.0% of a lubricant; and about 2.0% to 30.0%, by weight, of $SiO_2$; wherein said pesticidal composition is pelletized and has a reduced mammalian toxicity.

19. A pesticidal resin composition according to Claim 18, wherein said pesticide is O,O-diethyl S-[[(1,1-dimethylethyl)thio]methyl]phosphorodithioate or O,O-diethyl-S-(ethylthiomethyl)phosphorodithioate.

20. A pesticidal resin composition according to Claim 19, wherein said resin stabilizing agent is metal stearate, alkaline earth metal stearate, calcium/zinc stearate, epoxidized soybean oil or mixtures thereof; said secondary plasticizing agent is butyl benzyl phthalate, tricresyl phosphate, soybean oil, trioctyl mellitate, diisononyl phthalate, organic citrates, acetyl tributylcitrate or mixtures thereof; and said mineral additive is alkaline earth metal sulfates, alkaline earth metal carbonates, clay, mica, wallstonite, cellulose products, or mixtures thereof.

21. A process for the preparation of a pelletized pesticidal composition, said composition containing about 1.0% to 65.0%, by weight, of a pesticide, the technical grade of said pesticide having an oral and/or dermal LD50, as measured on rats or rabbits, of less than 50 mg/kg; about 5.0% to 60.0%, by weight of a polyvinylic suspension resin having a weight average molecular weight of about 260,000 to 340,000; about 0.2% to 2.0%, by weight, of a heat stabilizing agent or mixture of heat stabilizing agents for the resin; about 0.0% to 1.0%, by weight, of a lubricant; about 0.0% to 50.0%, by weight, of a secondary plasticizing agent; about 0.0% to 80.0%, by weight, of a mineral additive; and 2.0% to 30.0%, by weight, of $SiO_2$; said process comprising: dry blending, in a high intensity mixer, at a temperature of about 90°C to 110°C, a mixture of 1.0% to 65.0%, by weight, of said pesticide; 5.0% to 60.0%, by weight, of said polyvinylic resin; 0.2% to 2.0%, by weight, of said stabilizing agent; and 0.0% to 1.0%, by weight, of said lubricant; cooling said blended mixture; admixing with the cooled blended mixture about 0.0% to 50.0%, by weight, of said secondary plasticizing agents; 0.0% to 80.0%, by weight, of said filler and 2.0% to 30.0%, by weight, of $SiO_2$; introducing the thus-prepared mixture into an extruder or melt pump; heating said mixture to about 150°C to 180°C; extruding the heated mixture through a die; cutting the extrudate into pellets; introducing the thus-formed pellets into a stream of water which transports them to a filter where the water is separated from the pellets; and drying the pellets.

22. A process according to Claim 21, wherein said pesticide is terbufos, phorate, fonofos, phosfolan, aldicarb, demeton, ethoprophos, thionazin, carbofuran, isofenphos, disulfoton or fensulfothion.

23. A process according to Claim 22, wherein said pesticide is O,O-diethyl S-[[(1,1-dimethylethyl)thio]-methyl]phosphorodithioate.

24. A process according to Claim 22, wherein said pesticide is O,O-diethyl-S-(ethylthiomethyl)-phosphorodithioate.

25. A process according to Claim 21, wherein 1.0% to 3.0%, by weight, of said pesticide is dry blended with 5.0% to 60.0% of said polyvinyl chloride dispersion resin having a weight average molecular weight of 260,000 to 340,000, 0.2% to 2.0% of said stabilizing agent for the resin and 0.1% to 1.0% of said lubricant at a temperature of about 90°C to 100°C; cooling the dry blended mixture; admixing with 0.2% to 25%, by weight, of said secondary plasticizing agent; 20.0% to 80.0%, by weight, of said mineral additive and 3.0% to 6.0%, by weight, of $SiO_2$; heating said resulting mixture to about 150°C to 180°C; extruding and pelletizing.

26. A process according to Claim 25, wherein said pesticide is O,O-diethyl-S-(ethylthiomethyl)-phosphorodithioate, O,O-diethyl-S-[[(1,1-dimethylethyl)thio]methyl]phosphorodithioate or mixtures thereof.

27. A process according to Claim 26, wherein said secondary plasticizer is organic phthalate, organic phosphate, organic adipate, epoxidized tall oil, epoxidized vegetable oil, organic trimellitate, organic citratea or mixtures thereof; said stabilizing agent is metal stearate, alkaline earth metal stearate, calcium/zinc stearate, epoxidized vegetable oil, organic tin complex, organic phosphite or mixtures thereof; said lubricant is alkaline earth metal stearate, stearic acid, paraffin wax, amide wax, magnesium, lead or aluminum stearate, a low molecular weight polyethylene or mixtures thereof; and said mineral additive is alkaline earth metal sulfate or carbonate, a clay, mica wallstonite or cellulose product or mixtures thereof.